(19) Europäisches Patentamt / European Patent Office / Office européen des brevets

(11) **EP 3 995 991 A2**

(12) **DEMANDE DE BREVET EUROPEEN**

(43) Date de publication:
**11.05.2022 Bulletin 2022/19**

(21) Numéro de dépôt: **21206571.8**

(22) Date de dépôt: **04.11.2021**

(51) Classification Internationale des Brevets (IPC):
**G06K 9/00** *(2022.01)* **G06K 9/62** *(2022.01)*

(52) Classification Coopérative des Brevets (CPC):
**G06K 9/627; G06V 20/69**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.11.2020 FR 2011442**

(71) Demandeur: **Commissariat à l'énergie atomique et aux énergies alternatives**
**75015 Paris (FR)**

(72) Inventeurs:
• **ALLIER, Cédric**
**38054 GRENOBLE cedex 09 (FR)**
• **KRÄMER, Dorothée**
**38054 GRENOBLE cedex 09 (FR)**
• **HERVE, Lionel**
**38054 GRENOBLE cedex 09 (FR)**

(74) Mandataire: **INNOV-GROUP**
**310, avenue Berthelot**
**69372 Lyon Cedex 08 (FR)**

(54) **PROCÉDÉ DE DÉTECTION D'UN ÉVÈNEMENT CELLULAIRE**

(57)    Procédé de détection ou de prévision de la survenue d'un événement cellulaire, choisi parmi une division cellulaire ou une mort cellulaire dans un échantillon (10), l'échantillon s'étendant selon au moins un plan d'échantillon ($P_{10}$) et comportant des cellules ($10_p$), baignant dans un milieu, le procédé comportant les étapes suivantes :
- a) disposition de l'échantillon entre une source de lumière (11) et un capteur d'image (16);
- b) illumination de l'échantillon (10) par la source de lumière (11) et acquisition de plusieurs images (($I_1(t_i)$, $I_1(t_i + 1)$ ... $I_1(t_i + K)$) successives de l'échantillon, en différents instants ($[t_i; t_i + K]$) formant une plage temporelle d'acquisition, chaque image étant représentative d'une onde lumineuse d'exposition auquel est exposé le capteur d'image ;
- c) à partir chaque image acquise de l'échantillon, calcul d'une image d'observation à chaque instant ($I_{10}(t_i)$, $I_{10})(t_i + 1)$ ... $I_{10}(t_i + K)$), l'image d'observation correspondant à une distribution spatiale d'une différence de trajet optique induite par les cellules, ou d'une absorbance des cellules, dans le plan d'échantillon ($P_{10}$);
- d) utilisation des images d'observation résultant de c), en tant que données d'entrée d'un algorithme d'intelligence artificielle supervisé ($CNN_d$, $CNN_p$), de façon à prévoir ou localiser une survenue de l'évènement cellulaire.

Fig. 3A

Fig. 3B

EP 3 995 991 A2

Fig. 3C

Fig. 3D

Fig. 3E

Fig. 3F

Fig. 3G

Fig. 3H

Fig. 3I

**Description**

**DOMAINE TECHNIQUE**

Le domaine technique de l'invention est l'observation d'un évènement cellulaire, en particulier la division cellulaire ou la mort cellulaire, à l'aide de moyens de détection optiques.

**ART ANTERIEUR**

L'observation de cellules est fréquemment confrontée à la détection d'événements affectant la vie des cellules, et en particulier la division cellulaire (mitose ou méiose), ou la mort cellulaire.

La mitose est un processus de division cellulaire complexe, qui fait toujours l'objet d'études approfondies. En effet, l'observation de mitoses est un élément important pour étudier des pathologies impliquant un dérèglement de la division cellulaire, en particulier le cancer.

A l'heure actuelle, les mitoses sont généralement observées par microscopie, qu'il s'agisse de microscopie de fluorescence, de microscopie standard, en utilisant un marqueur coloré, ou de microscopie à contraste de phase. Cependant, en microscopie, le champ d'observation est restreint, du fait du fort grossissement conféré par les objectifs équipant les microscopes.

Il peut également être nécessaire de surveiller la survenue d'une mort cellulaire. Actuellement, à l'échelle industrielle, les principaux dispositifs optiques d'estimation de la viabilité cellulaires sont basés sur le recours à des marqueurs de viabilité, et à des analyses de type colorimétrique (marquage au bleu trypan) ou de fluorescence (marquage à l'iodure de propidium). Un procédé optique sans marquage a été décrit dans US10481076.

Une difficulté se pose lorsqu'on dispose d'un échantillon, comportant de nombreuses cellules, s'étendant sur une surface plus importante que le champ d'observation d'un microscope. Si l'on souhaite disposer d'une statistique d'observation suffisante, il est difficile d'observer simultanément différentes parties d'un même échantillon, d'autant plus que les mitoses surviennent à des instants aléatoires.

Le document WO2018187548 décrit un dispositif permettant d'établir des images de microorganismes par imagerie de diffusion, afin d'effectuer des tests de susceptibilité aux antibiotiques, en particulier pour évaluer la concentration minimale inhibitrice. La lumière diffusée par les microorganismes est collectée par une caméra focalisée. On obtient des images sur lesquelles les microorganismes apparaissent sous la forme de points lumineux sous fond noir. Une série d'images permet de former une image de trace, correspondant à un parcours de chaque microorganisme entre les différentes images obtenues. On peut ainsi effectuer un suivi de mouvement, permettant de repérer une division cellulaire.

La demande de brevet EP3519899A1 décrit un dispositif d'observation bimodal, permettant une combinaison entre imagerie sans lentille et microscopie conventionnelle. Il s'agit de tirer profit du large champ d'observation de l'imagerie sans lentille, et de la haute résolution conférée par la microscopie. Le dispositif permet de basculer entre une première modalité, en l'occurrence l'imagerie sans lentille, permettant une observation de l'échantillon en champ large, et une deuxième modalité, en l'occurrence la microscopie, pour observer des détails de l'échantillon.

L'invention décrite ci-après, permet d'identifier automatiquement différentes parties d'un échantillon dans lesquelles un évènement cellulaire, tel que précédemment décrit, a lieu. Cela permet d'effectuer un comptage ou d'observer chaque division individuellement, par microscopie.

**EXPOSE DE L'INVENTION**

Un premier objet de l'invention est un procédé de détection ou de prévision de la survenue d'un évènement cellulaire, choisi parmi une division cellulaire ou une mort cellulaire, dans un échantillon, l'échantillon s'étendant selon au moins un plan d'échantillon et comportant des cellules, baignant dans un milieu, le procédé comportant les étapes suivantes :

- a) disposition de l'échantillon entre une source de lumière et un capteur d'image;
- b) illumination de l'échantillon par la source de lumière et acquisition de plusieurs images successives de l'échantillon, par le capteur d'images, en différents instants formant une plage temporelle d'acquisition, chaque image étant représentative d'une onde lumineuse d'exposition auquel est exposé le capteur d'image ;
- c) à partir chaque image acquise de l'échantillon, calcul d'une image d'observation à chaque instant, l'image d'observation correspondant à une distribution spatiale d'une différence de trajet optique induite par les cellules, ou d'une absorbance des cellules, dans le plan d'échantillon ;

le procédé étant caractérisé en ce qu'il comporte également :

- d) utilisation des images d'observation résultant de c), en tant que données d'entrée d'un algorithme d'intelligence artificielle supervisé, de façon à

  • détecter et localiser une survenue de l'évènement cellulaire durant la plage temporelle d'acquisition;
  • ou prédire une survenue et une localisation de l'évènement cellulaire postérieurement à la plage temporelle d'acquisition.

La différence de trajet optique, en chaque coordonnée transversale correspond à une différence entre le trajet optique de l'onde lumineuse d'exposition respectivement en présence et en l'absence de cellule à ladite coordonnée transversale. La différence de trajet optique peut notamment correspondre :

- en présence d'une cellule, à une différence entre les indices de réfraction respectifs de la cellule et du milieu multipliée par l'épaisseur de ladite cellule ;
- en l'absence de cellule, à une valeur nulle.

Au cours de l'étape c), chaque image d'observation peut être calculée en mettant en œuvre un algorithme itératif, comprenant les sous-étapes suivantes :

- i) attribution de paramètres de l'échantillon en différentes coordonnées du plan de l'échantillon, au moins un paramètre étant la différence de trajet optique ou l'absorbance;
- ii) calcul d'une image complexe de l'échantillon, en fonction des paramètres de l'échantillon, l'image complexe de l'échantillon étant définie dans le plan de l'échantillon;
- iii) propagation de l'image complexe de l'échantillon résultant de ii), de façon à estimer une image acquise par le capteur d'image ;
- iv) comparaison de l'image estimée lors de iii) avec une image acquise par le capteur d'image, au même instant ;
- v) en fonction de la comparaison, mise à jour de paramètres de l'échantillon ;
- vi) réitération des sous-étapes ii) à v) en mettant à jour à chaque itération, l'image complexe de l'échantillon à l'aide des paramètres mis à jour lors de la sous-étape v) de l'itération précédente, les sous-étapes ii) à v) étant réitérées pendant un nombre d'itérations prédéterminées ou jusqu'à l'atteinte d'un critère d'arrêt des itérations.

Le procédé peut comporter :

- vii) utilisation des paramètres de l'échantillon, résultant de vi), en tant que données d'entrée d'un réseau de neurones d'actualisation, pour actualiser les paramètres de l'échantillon ;
- viii) puis réitération des sous-étapes i) à vi), en utilisant, dans l'étape i), les paramètres de l'étape vii).

L'étape c) peut comporter :

- une estimation d'un indice de réfraction de cellules ;
- une prise en compte d'une épaisseur de chaque cellule, selon l'axe de propagation ;
- en chaque coordonnée transversale correspondant à une cellule, une détermination de la différence de trajet optique à partir de l'indice de réfraction et de l'épaisseur de la cellule.

Selon un mode de réalisation, l'algorithme d'intelligence artificielle supervisé met en œuvre un réseau de neurones convolutif, les images d'observation étant utilisées en tant que couche d'entrée du réseau de neurones convolutif.
L'étape d) peut comporter une détection et une localisation d'une survenue de l'évènement cellulaire durant la plage temporelle d'acquisition.
L'étape d) peut comporter une détection et une localisation d'une survenue de l'évènement cellulaire dans un intervalle temporel de prévision, postérieurement la plage temporelle d'acquisition.
L'intervalle temporel de prévision peut être survenir entre 10 minutes et 1 heure après la plage temporelle d'acquisition.
Selon une possibilité, aucune optique de formation d'image n'est disposée entre l'échantillon et le capteur d'image.
Selon une possibilité, le capteur d'image mis en œuvre lors de l'étape b) est un premier capteur d'image, le procédé comportant, suite à l'étape d),

- e) détermination d'une région d'intérêt de l'échantillon, comprenant la division cellulaire ;

- f) positionnement de l'échantillon dans le plan objet d'un système optique, le système optique définissant un grandissement supérieur à 1, le système optique étant couplé à un deuxième capteur d'image ;
- g) acquisition d'une image de la région d'intérêt de l'échantillon par le deuxième capteur d'image.

Selon une possibilité, l'échantillon comporte un marqueur fluorescent, le marqueur fluorescent définissant une bande spectrale d'excitation et une bande spectrale de fluorescence, le procédé étant tel que lors de l'étape g) :

- l'échantillon est illuminé par une deuxième source de lumière, configurée pour illuminer l'échantillon selon la bande spectrale d'excitation ;
- l'image de la région d'intérêt de l'échantillon est acquise dans la bande spectrale de fluorescence.

Un deuxième objet de l'invention est un dispositif d'observation d'un échantillon, comportant :

- une source de lumière ;
- un capteur d'image ;
- un support, configuré pour maintenir l'échantillon entre la source de lumière et le capteur d'image ;

une unité de traitement, configurée pour mettre en œuvre les étapes c) et d) d'un procédé selon le premier objet de l'invention, à partir d'images acquises par le capteur d'image.

L'invention sera mieux comprise à la lecture de l'exposé des exemples de réalisation présentés, dans la suite de la description, en lien avec les figures listées ci-dessous.

## FIGURES

Les figures 1A à 1C représentent un exemple de dispositif permettant une mise en œuvre de l'invention.

La figure 2A représente les principales étapes d'un procédé permettant une détection ou une prévision de la survenue d'une division cellulaire.

La figure 2B schématise un réseau de neurones convolutif d'actualisation.

Les figures 3A et 3B montrent des images respectivement d'une différence de trajet optique d'un échantillon et d'une absorbance réels d'un échantillon.

La figure 3C est une simulation d'une image acquise par un capteur d'image, cette image étant estimée à l'aide des images représentées sur les figures 3A et 3B.

Les figures 3D et 3E montrent des images respectivement d'une différence de trajet optique d'un échantillon et d'une absorbance obtenus à partir de l'image de la figure 3C, en mettant en œuvre un algorithme de reconstruction itératif.

Les figures 3F et 3G montrent des images respectivement d'une différence de trajet optique d'un échantillon et d'une absorbance obtenus en utilisant un réseau de neurones d'actualisation à partir des images représentées sur les figures 3D et 3E.

Les figures 3H et 3I montrent des images respectivement d'une différence de trajet optique d'un échantillon et d'une absorbance obtenus mettant en œuvre un algorithme itératif de reconstruction, initialisé par les images des figures 3F et 3G.

La figure 4 schématise un réseau de neurones convolutif de détection ou de prédiction.

Les figures 5A et 5B montrent un jeu d'apprentissage d'un réseau de neurones de détection de mitose.

Les figures 5C et 5D montrent un jeu d'apprentissage d'un réseau de neurones de prévision de mitose.

La figure 5E montre des images d'observation d'un échantillon permettant de conclure à une survenue d'une mitose, de façon à produire l'image 5D.

La figure 5F est une image de sortie d'un réseau de neurones de prévision d'une division cellulaire.

Les figures 6A et 6B montrent un jeu d'apprentissage d'un réseau de neurones de détection de mort cellulaire.

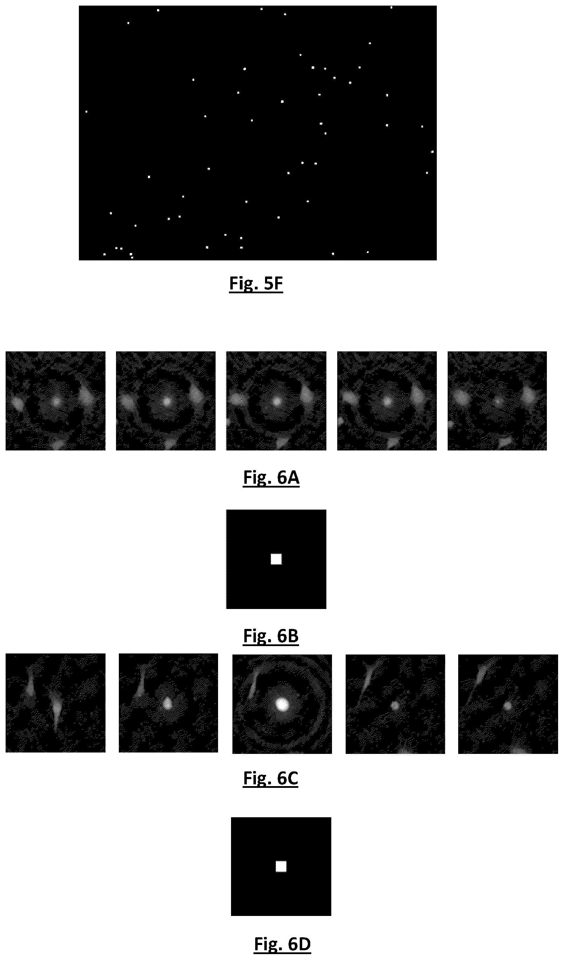

Il en est de même des figures 6C et 6D.

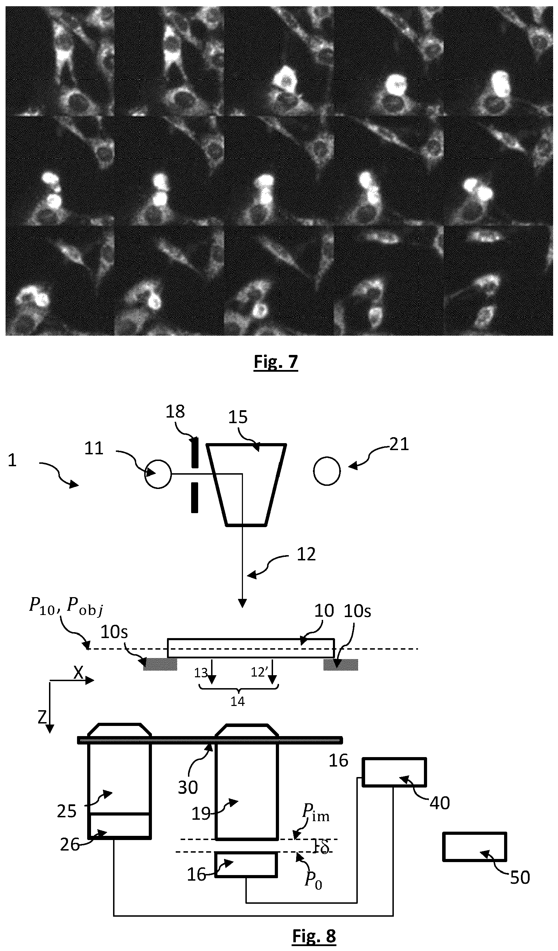

La figure 7 montre une série d'images de microscopie de fluorescence acquises toutes les 10 minutes avant, pendant et après une survenue d'une mitose.

La figure 8 représente un autre exemple de dispositif permettant une mise en œuvre de l'invention.

## EXPOSE DE MODES DE REALISATION PARTICULIERS

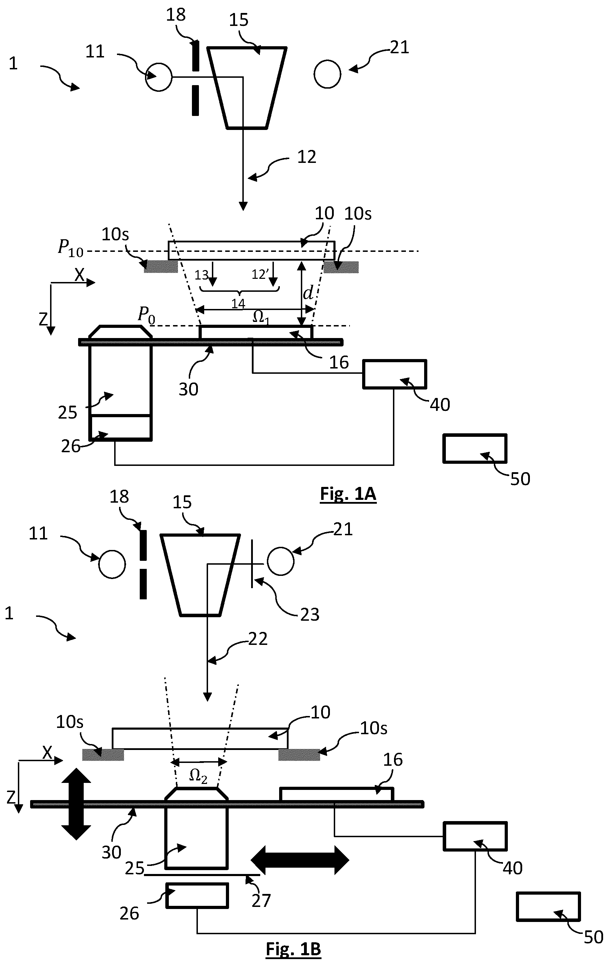

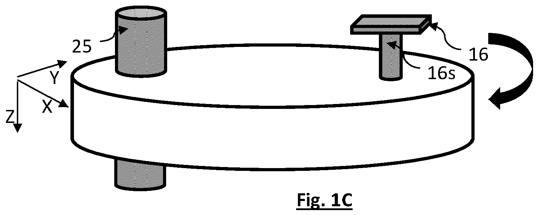

Les figures 1A, 1B et 1C représentent un exemple de dispositif d'observation 1 d'un échantillon permettant une mise en œuvre de l'invention. Il s'agit d'un dispositif permettant une observation d'un échantillon selon une première modalité d'imagerie sans lentille, et une deuxième modalité d'imagerie conventionnelle, en imagerie focalisée, en utilisant un objectif permettant d'obtenir un grossissement de l'image. Le dispositif d'observation est inspiré du dispositif bimodal décrit dans EP3519899A1, cité dans l'art antérieur. La figure 1A représente le dispositif configuré selon la modalité d'imagerie sans lentille, tandis que la figure 1B montre le dispositif configuré selon une modalité de microscopie focalisée, par exemple en imagerie de fluorescence

Le dispositif comporte une première source de lumière 11, apte à émettre une première onde lumineuse 12, dite onde lumineuse incidente, se propageant vers un échantillon 10, selon un axe de propagation Z, dans une première bande spectrale $\Delta\lambda$.

L'échantillon 10 est disposé sur un support d'échantillon $10_s$. L'échantillon comporte un milieu de culture $10_m$, dans lequel baignent des cellules $10_p$. Le milieu de culture est un milieu propice au développement de cellules.

Dans cet exemple, l'échantillon comporte un marqueur fluorescent $10_f$, adapté pour permettre la formation d'images de fluorescence permettant une observation de la mitose. Le marqueur fluorescent génère une lumière de fluorescence, dans une bande spectrale de fluorescence, lorsqu'il est illuminé par une lumière d'excitation, dans une bande spectrale d'excitation. De façon alternative, l'échantillon peut comporter un marqueur coloré. Le recours à un marqueur exogène, coloré ou fluorescent, n'est pas un élément essentiel de l'invention. Un tel marqueur n'est utile que lorsqu'une modalité de microscopie focalisée, décrite par la suite, est mise en œuvre.

L'épaisseur de l'échantillon 10, selon l'axe de propagation Z, est de préférence comprise entre 20 $\mu$m et 500 $\mu$m. L'échantillon s'étend selon au moins un plan $P_{10}$, dit plan de l'échantillon, de préférence perpendiculaire à l'axe de propagation Z. Il est maintenu sur le support 10s à une distance d d'un premier capteur d'image 16. Le plan de l'échantillon est défini par les axes X et Y représenté sur la figure 1A.

De préférence, le trajet optique parcouru par la première onde lumineuse 12 avant d'atteindre l'échantillon 10 est supérieur à 5 cm. Avantageusement, la première source de lumière, vue par l'échantillon, est considérée comme ponctuelle. Cela signifie que son diamètre (ou sa diagonale) est préférentiellement inférieur au dixième, mieux au centième du trajet optique entre l'échantillon et la source de lumière. La première source de lumière 11 peut être, par exemple, une diode électroluminescente ou une source laser, par exemple une diode laser. Elle peut être associée à diaphragme 18, ou filtre spatial. Le diaphragme n'est pas nécessaire, en particulier lorsque la source de lumière est suffisamment ponctuelle, notamment lorsqu'il s'agit d'une source laser.

De préférence, la bande spectrale $\Delta\lambda$ de l'onde lumineuse incidente 12 a une largeur inférieure à 100 nm. Par largeur de bande spectrale, on entend une largeur à mi-hauteur de ladite bande spectrale.

Le dispositif, tel que représenté sur la figure 1A, comporte un prisme 15, apte à réfléchir l'onde lumineuse incidente 12 vers l'échantillon 10. Le recours à un tel prisme permet de maintenir les sources de lumière immobiles par rapport à l'échantillon. Un tel prisme est facultatif.

Le premier capteur d'image 16 est apte à former une image $I_1$ selon un plan de détection $P_0$. Dans l'exemple représenté, il s'agit d'un capteur d'image comportant une matrice de pixels, de type CCD ou un CMOS, et dont la surface est généralement supérieure à 10 mm$^2$. La surface de la matrice des pixels, dite surface de détection, dépend du nombre de pixels et de leur taille. Elle est généralement comprise entre 10 mm$^2$ et 50 mm$^2$. Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est préférentiellement comprise entre 50 $\mu$m et 2 cm, de préférence comprise entre 100 $\mu$m et 2 mm.

On remarque l'absence d'optique de grossissement entre le premier capteur d'image 16 et l'échantillon 10. Cela n'empêche pas la présence éventuelle de microlentilles de focalisation au niveau de chaque pixel du premier capteur d'image 16, ces dernières n'ayant pas de fonction de grandissement de l'image acquise par le premier capteur d'image.

Du fait de la proximité entre le premier capteur d'image 16 et l'échantillon 10, l'image $I_1$ (ou première image) acquise par le premier capteur d'image, s'étend selon un premier champ d'observation $\Omega_1$ légèrement inférieur à l'aire du premier capteur d'image 16, c'est-à-dire typiquement compris entre 10 mm$^2$ et 50 mm$^2$. Il s'agit d'un champ d'observation élevé si on le compare au champ d'observation conféré par un objectif de microscope à fort grandissement, par exemple un objectif de grandissement supérieur à 10 décrit par la suite, en lien avec la deuxième modalité. Ainsi, l'image $I_1$ acquise par le premier capteur d'image 16 permet d'obtenir une information exploitable de l'échantillon selon un premier champ d'observation $\Omega_1$ élevé. Un élément important de l'invention est de profiter de ce champ d'observation élevé afin de sélectionner une région d'intérêt ROI de l'échantillon à partir de l'image $I_1$, puis d'analyser la région d'intérêt sélectionnée par imagerie focalisée, par exemple une imagerie de fluorescence, selon la deuxième modalité optique.

Le dispositif d'observation 1 peut comporter une deuxième source de lumière 21, ainsi qu'un système optique 25, doté d'un grandissement supérieur à 1. La deuxième source de lumière 21 émet une deuxième onde lumineuse 22 se propageant jusqu'à l'échantillon. Un deuxième capteur d'image 26 est couplé au système optique 25, le deuxième capteur d'image 26 étant disposé dans le plan focal image du système optique 25. Le système optique définit un grandissement, de préférence de l'ordre de ou supérieur à 10. Le deuxième capteur d'image 26 permet d'obtenir une information détaillée de la région d'intérêt *ROI* de l'échantillon sélectionnée. Du fait du grandissement du système optique 25, le champ d'observation $\Omega_2$ du deuxième capteur d'image 26 est réduit par rapport au premier champ d'observation $\Omega_1$. Le deuxième capteur d'image 26 est configuré pour former une image de la région d'intérêt selon une résolution élevée. Le deuxième capteur d'image 26 permet une acquisition d'une deuxième image $I_2$, de résolution spatiale élevée, à travers l'objectif 25.

L'échantillon peut comporter un marqueur cellulaire. Il peut s'agir d'un marqueur fluorescent ou d'un marqueur coloré. Lorsque le marqueur est fluorescent, la deuxième onde lumineuse 22 est émise dans une bande spectrale d'excitation du marqueur fluorescent. Le deuxième capteur d'image est configuré pour former une image dans la bande spectrale de fluorescence du marqueur fluorescent. Il est par exemple couplé à un filtre passe bande 27, délimitant une bande passante incluse dans la bande spectrale de fluorescence du marqueur fluorescent. La deuxième image permet ainsi d'obtenir une représentation détaillée de la fluorescence de région d'intérêt *ROI* identifiée sur la première image $I_1$. Lorsque le marqueur cellulaire est un marqueur fluorescent, la deuxième source de lumière peut être couplée à un filtre d'excitation 23, définissant une bande passante incluse dans la bande spectrale d'excitation du marqueur fluorescent. Une image de fluorescence permet d'observer précisément l'évolution de certaines structures subcellulaires durant l'évènement cellulaire considéré : division cellulaire ou mort cellulaire.

La première source de lumière 11 et la deuxième source de lumière 21 peuvent être disposées face à l'échantillon 10, et activées successivement, auquel cas le prisme 15 n'est pas utile.

Selon une possibilité, la première source de lumière 11 et la deuxième source de lumière 21 forment une même source de lumière.

De préférence, entre la première modalité d'observation et la deuxième modalité d'observation, l'échantillon 10 est maintenu immobile, tandis que le premier capteur d'image 16 et l'ensemble système optique 25 - deuxième capteur d'image 26 sont déplacés par rapport à l'échantillon, entre les deux modalités d'observation. On a représenté, sur les figures 1A, 1B et 1C, une platine mobile 30, supportant le premier capteur d'image 16 et l'ensemble système optique 25/capteur d'image 26, et permettant leur déplacement par rapport à l'échantillon 10. Comme illustré sur la figure 1B, la platine mobile peut être configurée parallèlement et perpendiculairement à l'axe de propagation de la lumière Z. Une unité de commande 40 peut commander la platine mobile 30, de façon à déterminer, dans chaque modalité, une position relative de l'échantillon 10 par rapport au premier capteur d'image 16 ou par rapport à l'ensemble système optique 25/deuxième capteur d'image 26.

De façon alternative, l'échantillon est monté sur un support $10_s$ mobile, permettant de le déplacer soit face au premier capteur d'image 16, soit face à l'ensemble système optique 25/deuxième capteur d'image 26. Le capteur d'image peut également être disposé sur un support 16s, comme représenté sur la figure 1C.

De préférence, le déplacement relatif du premier capteur d'image 16 et du système optique 25 est calculé automatiquement par l'unité de commande 40, en fonction de la région d'intérêt *ROI* de l'échantillon sélectionnée à partir de la première image $I_1$.

Comme décrit par la suite, une des finalités de l'invention est une détection ou une prévision de la survenue d'un évènement cellulaire à partir d'images $I_1$ acquises selon la première modalité. La détection ou la prévision permet de définir une région d'intérêt *ROI* dans laquelle survient l'évènement cellulaire. Le dispositif multimodal permet la formation d'une image de haute résolution $I_2$, selon la deuxième modalité. Il en résulte une observation plus nette de l'évènement cellulaire. Comme précédemment évoqué, l'évènement cellulaire peut être une division cellulaire (mitose ou méiose), ou une mort cellulaire. La région d'intérêt *ROI* peut être définie automatiquement, à partir d'images $I_1$, et transmise à l'unité de commande 40. Cette dernière actionne alors la platine 30 pour placer l'échantillon selon la deuxième modalité d'analyse, c'est-à-dire face à l'objectif 25, de telle sorte que la région d'intérêt *ROI* soit dans le plan objet de l'objectif 25.

Un aspect important de l'invention concerne la détection ou la prévision d'une survenue d'un évènement cellulaire dans l'échantillon à partir d'une image $I_1$ acquise selon la première modalité. La première modalité peut être mise en œuvre indépendamment de la deuxième modalité. Dans ce cas, la première modalité peut permettre d'effectuer une détection, sans marquage, de l'évènement cellulaire. On évite alors le recours à un marqueur coloré ou à un marqueur fluorescent. Lorsque la première modalité est mise en œuvre de façon indépendante, le dispositif peut comporter une seule source de lumière 11 et un seul capteur d'image 16.

Lors de l'acquisition d'une image $I_1$ selon la première modalité, sous l'effet de l'onde lumineuse incidente 12, l'échantillon peut engendrer une onde diffractée 13, susceptible de produire, au niveau du plan de détection $P_0$, des interférences avec une partie de l'onde lumineuse incidente 12 transmise par l'échantillon. Durant l'acquisition de l'image $I_1$ selon la première modalité, le premier capteur d'image 16 est exposé à une onde lumineuse d'exposition 14. L'onde lumineuse d'exposition 14, transmise par l'échantillon 10 comprend :

- une composante 13 résultant de la diffraction de la première onde lumineuse incidente 12 par l'échantillon ;
- une composante 12', transmise par l'échantillon, et résultant de l'absorption de la première onde lumineuse incidente 12 par l'échantillon.

Ces composantes forment des interférences dans le plan de détection $P_0$. Aussi, chaque image $I_1$ acquise par le premier capteur d'image 16, selon la première modalité, comporte des figures d'interférences (ou figures de diffraction), chaque figure d'interférence étant générée par l'échantillon.

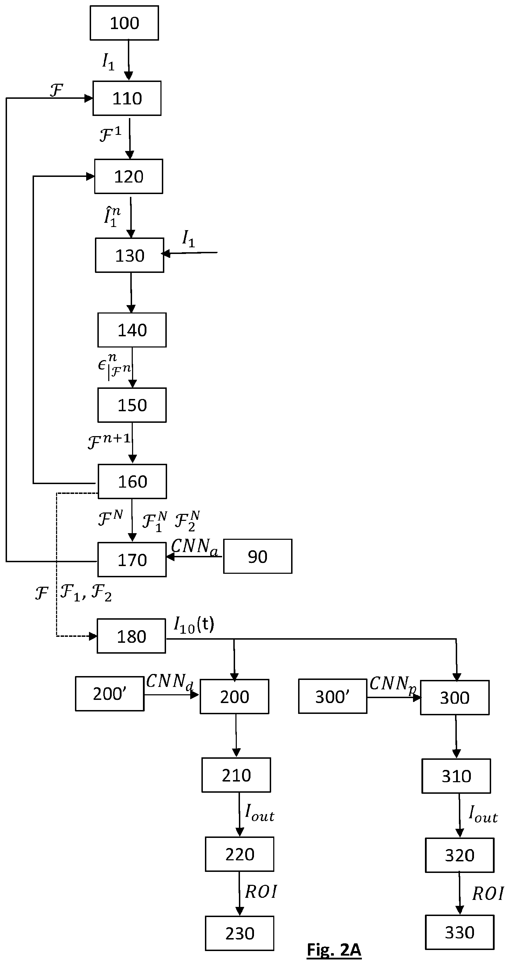

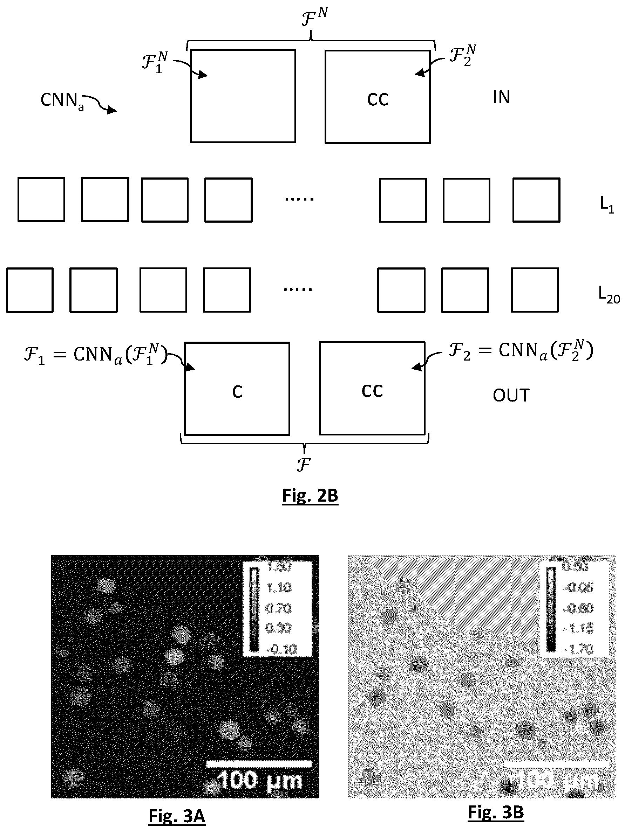

Le dispositif comporte une unité de traitement 50, configurée pour traiter chaque image $I_1$ acquise par le premier capteur d'image 16 selon la première modalité, de façon à détecter ou prévoir la survenue d'une division cellulaire dans l'échantillon. L'unité de traitement 50 peut comporter un processeur configuré pour mettre en œuvre des étapes décrites par la suite, en lien avec la figure 2A.

Selon une première approche, on considère que l'échantillon est décrit par des vecteurs de paramètres $F(x,y)$, chaque vecteur de paramètres étant défini à une coordonnée transversale $(x,y)$ dans le plan $P_{10}$ de l'échantillon. Chaque terme de chaque vecteur correspond à une propriété optique de l'échantillon à la coordonnée $(x,y)$. L'expression « coordonnée transversale » désigne des coordonnées dans un plan perpendiculaire à l'axe de propagation Z.

Au moins un terme de chaque vecteur peut être une différence de trajet optique $L(x,y)$ induite par l'échantillon, selon l'axe de propagation Z. On considère dans chaque cellule $10_p$, l'échantillon a un indice de réfraction $n_p$, tandis que le milieu de culture $10_m$ dans lequel elle baigne a un indice de réfraction $n_m$. En chaque coordonnée transversale $(x,y)$, on considère que la différence de trajet optique $L(x,y)$ induite par une cellule, positionnée au niveau de ladite coordonnée, est telle que :

$$L(x, y) = (n_p - n_m) \times e(x, y) \ (1)$$

où $e(x,y)$ : épaisseur de la cellule à la coordonnée transversale $(x,y)$ et $\times$ est l'opérateur multiplication. Autrement dit, la différence de trajet optique induite par l'échantillon correspond à une différence entre :

- le trajet optique suivi par l'onde d'exposition 14, lors de sa propagation à travers l'échantillon, sous l'effet de la présence d'une cellule au niveau de la coordonnée $(x,y)$ ;
- le trajet optique suivi par l'onde d'exposition 14 en l'absence de cellule en ladite coordonnée.

En chaque coordonnée $(x,y)$ de l'échantillon, il est possible de définir une différence de trajet optique $L(x,y)$. Lorsqu'il n'y a pas de cellule en $(x,y)$, $L(x,y) = 0$. En présence d'une cellule,

$$L(x, y) = (n_p - n_m) \times e(x, y)$$

La différence de trajet optique de l'échantillon $L(x,y)$ est donc définie en fonction de l'indice de réfraction d'une cellule et de l'épaisseur d'une cellule, occupant une coordonnée $(x,y)$. L'épaisseur de la cellule est définie parallèlement à l'axe de propagation Z.

Le vecteur de paramètres $F(x,y)$ a une dimension $(1, N_w)$, où $N_w$ désigne le nombre de paramètres considérés pour chaque coordonnée transversale $(x,y)$. Un autre terme de chaque vecteur $F(x,y)$ peut être une absorbance $\alpha(x,y)$ de l'échantillon.

Dans l'exemple considéré, $N_w = 2$. Chaque vecteur $F(x,y)$ est tel que :

$$F(x, y) = \begin{bmatrix} L(x, y) = F_{w=1}(x, y) \\ \alpha(x, y) = F_{w=2}(x, y) \end{bmatrix}$$

Une première partie du traitement effectué, par l'unité de traitement 50, consiste à obtenir, à partir de chaque image $I_1$ acquise selon la première modalité, une image d'observation $I_{10}$ de l'échantillon. L'image d'observation est une image exploitable de l'échantillon, permettant une détection ou la prévision d'une division cellulaire. L'image d'observation de l'échantillon peut notamment être une image de la différence de trajet optique $L(x,y)$ de l'échantillon, ce dernier étant discrétisé en plusieurs coordonnées transversales $(x,y)$. Il peut également s'agir d'une image de l'absorbance de l'échantillon $\alpha(x,y)$ de l'échantillon. L'image d'observation $I_{10}$ peut être obtenue comme décrit dans la demande US16,907,407

Une deuxième partie du traitement consiste à utiliser différentes images d'observation, respectivement issues de différentes images acquises selon la première modalité, pour détecter ou prévoir une division cellulaire.

Le traitement de chaque image $I_1$ acquise selon la première modalité suit les étapes schématisées sur la figure 2A.

Les étapes 100 à 180 constituent la première partie du traitement, visant à former l'image d'observation $I_{10}$ de l'échantillon. On en expose ici les principaux principes, sachant que des détails sont donnés dans la demande US16,907,407.

Etape 100 : illumination de l'échantillon 10 à l'aide de la source lumineuse 11, et acquisition d'une image $I_1$ de l'échantillon 10 selon la première modalité, par le premier capteur d'image 16. Cette image forme un hologramme de l'échantillon.

L'image $I_1$ acquise par le premier capteur d'image 16 est une image de l'onde lumineuse d'exposition 14. Dans le plan de l'échantillon $P_{10}$, l'onde lumineuse d'exposition 14 peut être définie, en chaque position transversale $(x,y)$, par une expression complexe, de telle sorte que :

$$A_{10}(x,y) = b\,(x,y)exp(2i\pi\frac{L(x,y)}{\lambda} + \ \alpha(x,y))\ (2),$$

où :

- $\lambda$ correspond à une longueur d'onde représentative de l'onde lumineuse d'exposition 14 : il peut s'agir d'une longueur d'onde centrale de la bande spectrale $\Delta\lambda$ dans laquelle l'onde lumineuse incidente 12 est émise.
- $b(x,y)$ est une amplitude représentative de l'onde lumineuse incidente 12 atteignant l'échantillon. Cette amplitude peut être mesurée par le premier capteur d'image 16 en l'absence d'échantillon 10 sur le support 10s. La première source de lumière 11 éclaire alors directement le premier capteur d'image 16, de dernier formant alors une image. $I_{1,0}$. A partir de l'image $I_{1,0}$ acquise par le premier capteur d'image 16, en l'absence d'échantillon, on obtient $b(x,y)$ par $b(x,y) = \sqrt{I_{1,0}(x,y)}\ (1')$
- $L(x,y)$ et $\alpha(x,y)$ correspondent respectivement à la différence de trajet optique et à l'absorbance à la coordonnée $(x,y)$.

Lorsque l'on considère qu'une cellule, occupant une position $(x,y)$, est transparente, $\alpha(x,y) = 0$. Lorsque la cellule absorbe une partie de la lumière, $\alpha(x,y) < 0$.

Etape 110 : Initialisation des vecteurs de paramètres $F(x,y)$ définis en chaque coordonnée transversale de l'échantillon.

Les termes composant le vecteur de paramètres initial sont définis de façon arbitraire ou en fonction d'un a priori sur l'échantillon. Cette étape est effectuée pour chaque coordonnée transversale $(x,y)$ considérée. Les vecteurs de paramètres $F(x,y)$ définis lors de cette étape forment un ensemble $\mathcal{F}^1$ de vecteurs décrivant l'échantillon 10. Chaque vecteur initialisé est noté $F^1(x,y)$. Par la suite, on décrit une initialisation possible du vecteur de paramètres, en fonction de paramètres résultant de l'étape 170.

Les étapes 120 à 150 sont ensuite effectuées de façon itérative, à chaque itération étant affecté un rang $n$, $n$ étant un entier naturel. Lors de la première itération, $n = 1$. Au cours de chaque itération, on considère un ensemble de paramètres $\mathcal{F}^n$ de vecteurs de paramètres $F^n(x,y)$ résultant de l'étape 110 ou d'une itération précédente. L'exposant $n$ désigne le rang de l'itération.

Etape 120 : Estimation $\hat{I}_1^n$ de l'image $I_1$ acquise par le premier capteur d'image 16 lors de l'étape 100, à partir de l'ensemble $\mathcal{F}^n$ des vecteurs de paramètres $F^n(x,y)$.

En chaque position $(x,y)$, une expression complexe $A_{10}^n(x,y)$ de l'onde lumineuse d'exposition 14, dans le plan de l'échantillon $P_{10}$, est calculée selon l'expression (2), sur la base des vecteurs de paramètres $F^n(x,y)$. Chaque expression complexe $A_{10}^n(x,y)$, en différentes coordonnées $(x,y)$, forme à une image complexe $A_{10}^n$ de l'échantillon.

A partir de l'image complexe $A_{10}^n$, calculée dans le plan de l'échantillon selon (2), application d'un opérateur de propagation holographique $h_{P_{10} \to P_0}$, de façon à obtenir une image complexe $A_0^n$ de l'onde lumineuse d'exposition 14, dans le plan de détection $P_0$, selon l'expression :

$$A_0^n = A_{10}^n * h_{P_{10} \to P_0}\ (3).$$

$h_{P_{10} \to P0}$ est un opérateur de propagation holographique, usuellement utilisé dans le domaine de la reconstruction holographique, permettant une propagation du plan de l'échantillon $P_{10}$ vers le plan de détection $P_0$. Il peut s'agir d'un opérateur de Fresnel, par exemple :

$$h(x, y, z) = \frac{1}{i\lambda z} e^{j2\pi\frac{z}{\lambda}} \exp\left(i\pi \frac{x^2 + y^2}{\lambda z}\right) (4).$$

D'une façon générale, l'opérateur de propagation holographique modélise un transport de l'onde lumineuse d'exposition entre au moins deux points distants l'un de l'autre. Dans l'application décrite, le produit de convolution décrit en lien avec l'équation (3) modélise un transport de l'onde lumineuse d'exposition 14 entre le plan de l'échantillon $P_{10}$ et le plan de détection $P_0$.

En considérant la racine carrée du module de l'image complexe $A_0^n$, on obtient une estimation $\hat{I}_1^n$ de l'image acquise $I_1$ par le capteur d'image 16 lors de l'étape 100. Ainsi, $\hat{I}_1^n = \sqrt{mod\,(A_0^n)}$ (5) où *mod* désigne l'opérateur module.

Etape 130 : comparaison de l'image $\hat{I}_1^n$ estimée lors de l'étape 120 avec l'image $I_1$ acquise par le capteur d'image lors de l'étape 100. La comparaison peut être exprimée sous forme d'une différence ou d'un ratio, ou d'un écart quadratique.

Etape 140 : détermination d'un indicateur de validité $\epsilon_{|\mathcal{F}^n}^n$ de l'estimation $\hat{I}_1^n$.

Au cours de cette étape, on calcule un indicateur de validité $\epsilon_{|\mathcal{F}^n}^n$ représentant la pertinence de l'ensemble $\mathcal{F}^n$ des vecteurs $F^n(x,y)$ décrivant l'échantillon. L'indice $_{|\mathcal{F}^n}$ signifie que l'indicateur de validité $\epsilon_{|\mathcal{F}^n}^n$ est établi sachant l'ensemble $\mathcal{F}^n$ des vecteurs $F^n(x,y)$. Dans cet exemple, l'indicateur de validité est d'autant plus faible que l'échantillon est correctement décrit par l'ensemble $\mathcal{F}$.

L'indicateur de validité $\epsilon_{|\mathcal{F}^n}^n$ comporte un critère d'erreur $\epsilon_{0|\mathcal{F}^n}^n$, ce dernier quantifiant une erreur globale de l'image estimée $\hat{I}_1^n$ par rapport à l'image mesurée $I_1$. Par erreur globale, on entend une erreur pour chaque coordonnée $(x,y)$. Dans cet exemple, le critère d'erreur $\epsilon_{0|\mathcal{F}^n}^n$ est un scalaire.

Le critère d'erreur $\epsilon_{0|\mathcal{F}^n}^n$ est établi à partir de la comparaison des images $\hat{I}_1^n$ et $I_1$. Par exemple,

$$\epsilon_{0|\mathcal{F}^n}^n = \frac{1}{N_{x,y}} \iint \left| \frac{I_1(x,y) - \hat{I}_1^n(x,y)}{I_1(x,y)} \right| dx\,dy \quad (6)$$

Selon une possibilité, $\epsilon_{|\mathcal{F}^n}^n = \epsilon_{0|\mathcal{F}^n}^n$

Selon une autre possibilité, comme décrit dans la demande US20200124586, l'indicateur de validité $\epsilon_{|\mathcal{F}^n}^n$ prend également en compte un critère morphologique $\epsilon_{10|\mathcal{F}^n}^n$. A la différence du critère d'erreur $\epsilon_{0|\mathcal{F}^n}^n$, qui est défini à partir de données mesurées ou estimées dans le plan de détection $P_0$, le critère morphologique $\epsilon_{10|\mathcal{F}^n}^n$ est défini dans le plan de l'échantillon $P_{10}$.

Le critère morphologique $\epsilon_{10|\mathcal{F}^n}^n$ peut être tel que :

$$\epsilon_{10|\mathcal{F}^n}^n = \iint \sqrt{\left(\frac{\partial L^n(x,y)}{\partial x}\right)^2 + \left(\frac{\partial L^n(r)}{\partial y}\right)^2} \, dxdy \quad (7)$$

$L^n(x,y)$ est la différence de trajet optique estimée au cours d'une itération de rang $n$.

Dans cet exemple, le critère morphologique est un scalaire.

Ce critère tend à diminuer lorsque la grandeur $L^n(x,y)$ présente un minium d'oscillations, ce qui est par exemple le cas lorsque les particules ont une morphologie sphérique ou hémisphérique de particules. Les valeurs de $L^n(x,y)$ pour lesquelles le critère $\epsilon_{10|\mathcal{F}^n}^n$ est minimal correspondent donc à des particules, par exemple sphériques ou hémisphériques, isolées les unes des autres, avec un minimum d'oscillation de $L^n(x,y)$ entre les particules ou sur ces dernières.

Selon une possibilité,

$$\epsilon_{10|\mathcal{F}^n}^n = \iint \sqrt{\left(\frac{\partial L^n(x,y)}{\partial x}\right)^2 + \left(\frac{\partial L^n(r)}{\partial y}\right)^2} \, dxdy + \frac{1}{10}\int \sqrt{(L^n(x,y))^2} \, dxdy +$$

$$\frac{1}{10}\int \alpha^{n2}(x,y)dxdy + 10\int \alpha^{n2}(x,y)dxdy \ [\alpha(x,y) > 0] + 10\int \sqrt{(L^n(x,y))^2}dxdy \ [L(x,y) < 0]$$

$$(7')$$

où $[\alpha^n(x,y) > 0]$ et $[L^n(x,y) < 0]$ désignent le fait que les grandeurs $10\int \alpha^{n2}(x,y)dxdy$ et $10\int \sqrt{(L^n(x,y))^2}dxdy$ ne sont prises en compte que si $\alpha^n(x,y) > 0$ et $L^n(x,y) < 0$ respectivement.

L'indicateur de validité $\epsilon_{|\mathcal{F}^n}^n$ peut ainsi être exprimé en combinant les expressions (6) et (7), de telle sorte que :

$$\epsilon_{|\mathcal{F}^n}^n = \epsilon_{|\mathcal{F}^n}^n = \epsilon_{0|\mathcal{F}^n}^n + \gamma \epsilon_{10|\mathcal{F}^n}^n \quad (8)$$

soit, en prenant en compte (7)

$$\epsilon_{|\mathcal{F}^n}^n = \frac{1}{N_{x,y}}\iint \left|\frac{I_1(x,y)-\hat{I}_1^n(x,y)}{I_1(x,y)}\right| dxdy + \gamma \iint \sqrt{\left(\frac{\partial L^n(x,y)}{\partial x}\right)^2 + \left(\frac{\partial L^n(r)}{\partial y}\right)^2} \, dxdy \quad (9)$$

où $\gamma$ est un facteur de pondération positif.

<u>Etape 150</u> : Mise à jour des vecteurs $F^n(x,y)$ par minimisation de l'indicateur de validité $\epsilon_{|\mathcal{F}^n}^n$. L'indicateur de validité $\epsilon_{|\mathcal{F}^n}^n$ est une variable scalaire. Cependant, il dépend de l'ensemble $\mathcal{F}^n$ des vecteurs paramètres sur la base desquels il a été établi, par l'intermédiaire de l'image $\hat{I}_1^n$. Au cours de l'étape 150, on applique un algorithme de minimisation, de type descente de gradient, de façon à s'approcher progressivement, à chaque itération, de l'ensemble $\mathcal{F}^n$ permettant une minimisation satisfaisante de l'indicateur de validité $\epsilon_{|\mathcal{F}^n}^n$. Aussi, l'objectif de cette étape est d'établir un ensemble $\mathcal{F}^{n+1}$ de vecteurs $F^{n+1}(x,y)$ visant à obtenir, suite à une réitération des étapes 110 à 140, un indicateur de validité $\epsilon_{|\mathcal{F}^{n+1}}^{n+1}$ plus faible que l'indicateur de validité $\epsilon_{|\mathcal{F}^n}^n$ de l'itération courante. Cette étape permet de mettre à jour au moins un terme $F_w^n(x,y)$ de chaque vecteur $F^n(x,y)$.

Pour cela, on définit un gradient $G_w^n(x,y)$ de l'indicateur de validité $\epsilon_{|\mathcal{F}^n}^n$ à l'égard du paramètre optique correspondant au terme $F_w^n(x,y)$, de telle sorte que :

$$G_w^n(x,y) = \frac{\partial \epsilon_{|\mathcal{F}^n}^n}{\partial F_w^n(x,y)} \ (10)$$

Un algorithme de descente de gradient définit alors une direction $d_w^n$ ainsi qu'un pas d'avancement $\sigma_w^n$. Le terme $F_w(x,y)$ de chaque vecteur de paramètre est mis à jour selon l'expression : $F_w^{n+1}(x,y) = F_w^n(r) + d_w^n \, \sigma_w^n$ (11)

Le gradient $G_w^n(x,y)$ peut être défini pour chaque terme $F_w^n(x,y)$ de chaque vecteur $F^n(x,y)$.

<u>Etape 160</u> : réitération des étapes 120 à 150, en prenant en compte, lors de l'étape 120 de l'itération suivante, l'ensemble $\mathcal{F}^{n+1}$ mis à jour lors de l'étape 150 de l'itération dernièrement effectuée.

Les étapes 120 à 160 sont réitérées jusqu'à ce que la valeur de l'indicateur de validité $\epsilon_{|\mathcal{F}^n}^n$ soit considérée comme représentative d'une bonne description de l'échantillon par l'ensemble $\mathcal{F}^n$ de vecteurs $F^n(x,y)$. En prenant en compte un indicateur tel que défini dans les équations (8) ou (9), les itérations cessent lorsque la valeur de l'indicateur de validité $\epsilon_{|\mathcal{F}^n}^n$ est suffisamment faible.

<u>Etape 170</u> : Actualisation de l'ensemble $\mathcal{F}^n$ de vecteurs $F^n(x,y)$.

Au cours de cette étape, l'ensemble $\mathcal{F}^n$ de vecteurs $F^n(x,y)$ fait l'objet d'une actualisation en mettant en œuvre un réseau de neurones convolutif $CNN_a$ dit réseau de neurones d'actualisation. Le réseau de neurones convolutif comporte deux couches d'entrée IN et autant de couches de sortie OUT.

Le réseau de neurones d'actualisation $CNN_a$ comporte deux couches d'entrée IN. Chaque couche d'entrée IN représente une distribution spatiale d'un paramètre $F_w^N$ décrivant l'échantillon, telle que mise à jour lors de la dernière itération des étapes 120 à 160. $N$ désigne le rang de la dernière itération. Dans cet exemple, la première couche d'entrée représente une distribution spatiale $\mathcal{F}_1^N$ du premier paramètre $F_1^N(x,y)$ en l'occurrence la différence de trajet optique $L^N(x,y)$, dans le plan de l'échantillon tandis que la deuxième couche d'entrée représente une distribution spatiale $\mathcal{F}_2^N$ du deuxième paramètre $F_2^N(x,y)$, en l'occurrence l'absorbance $\alpha^N(x,y)$, dans le plan de l'échantillon.

D'une façon générale, l'algorithme est mis en œuvre à partir d'au moins une couche d'entrée IN, correspondant à une distribution spatiale $\mathcal{F}_w^N$ d'un paramètre $F_w^N(x,y)$ de rang w dans le plan de l'échantillon, résultant de la dernière itération $n = N$ des étapes 120 à 160. Dans l'exemple considéré, on utilise, en guise de couches d'entrée, les deux distributions $\mathcal{F}_1^N$ et $\mathcal{F}_2^N$ des paramètres $F_1^N(x,y)$ et $F_2^N(x,y)$ résultant de la dernière itération $N$ des étapes 120 à 160.

Entre les couches d'entrée IN et la couche de sortie OUT, le réseau de neurones comporte 20 couches de convolution $L_1,...L_{20}$, dont les rangs sont compris entre 1 (couche adjacente de la couche IN) à 20 (couche adjacente de la couche OUT). Chaque couche de convolution est suivie d'une couche de normalisation (batch normalization - normalisation de lot) et d'une couche de rectification linéaire, usuellement désignée "RELU", permettant notamment de supprimer certaines valeurs des images formant la couche de convolution. On peut par exemple supprimer les valeurs négatives en les remplaçant par la valeur 0. De façon connue dans le domaine des réseaux de neurones convolutifs, chaque couche de convolution est obtenue en appliquant un noyau de convolution est à une couche précédente. Dans cet exemple, le noyau de convolution est de taille $5 \times 5$. La couche de sortie $OUT = CNN_a(\mathcal{F}_w^N)$ représente au moins une distribution spatiale $\mathcal{F}_w$ d'un paramètre $F_w$, dans le plan de l'échantillon. On peut écrire $\mathcal{F}_w = CNN_a(\mathcal{F}_w^N)$, dans la mesure où le réseau de neurones $CNN_a$ permet une actualisation d'une distribution spatiale $\mathcal{F}_w$. Dans l'exemple représenté, la couche de sortie comporte une distribution spatiale $\mathcal{F}_1 = CNN_a(\mathcal{F}_1^N)$, $\mathcal{F}_2 = CNN_a(\mathcal{F}_2^N)$ de chaque paramètre considéré.

Le réseau de neurones d'actualisation CNN$_a$ a préalablement fait l'objet d'un apprentissage, en utilisant des images d'apprentissage correspondant à des situations connues, dites « ground truth » (vérité terrain). Sur les images d'apprentissage, chaque distribution spatiale $\mathcal{F}_{w,gt}$ de chaque paramètre d'ordre w est connue, l'indice *gt* signifiant « ground truth ». Les images d'apprentissage font l'objet d'une reconstruction itérative selon les étapes 120 à 160, de façon à obtenir des distributions spatiales reconstruites $\mathcal{F}_w^N$. La phase d'apprentissage permet un paramétrage du réseau de neurones, en particulier les filtres de convolution, de façon que chaque distribution spatiale $\text{CNN}_a(\mathcal{F}_w^N)$ soit la plus proche possible de $\mathcal{F}_{w,gt}$. L'étape d'apprentissage correspond à l'étape 90 sur la figure 2A.

Suite à la première itération de l'étape 170, on obtient un ensemble de vecteurs $\mathcal{F}$ représentant l'échantillon. L'ensemble de paramètres comporte chaque distribution spatiale $\mathcal{F}_w$ de chaque paramètre $F_w(x,y)$. Le procédé comporte une réitération des étapes 110 à 160. Dans l'étape 110 réitérée, on utilise l'ensemble de vecteurs $\mathcal{F}$ résultant de l'étape 170 en tant qu'ensemble de vecteurs d'initialisation $\mathcal{F}^1$.

L'utilisation du réseau de neurones d'actualisation CNN$_a$ permet de corriger des erreurs, de type repliement de phase, survenant au cours d'une première mise en œuvre de l'algorithme de reconstruction décrit en lien avec les étapes 120 à 160. Il peut en particulier s'agir de phénomènes de repliement de phase survenant lors de la reconstruction.

Suite à la réitération des étapes 110 à 160, initialisées par les vecteurs de paramètres résultant de l'étape 170, l'ensemble de vecteurs $\mathcal{F}^N$ résultant de la reconstruction est utilisé pour former une image d'observation, selon l'étape 180.

Etape 180 : formation d'une image d'observation $I_{10}$.

Suite à la deuxième série d'itérations des étapes 110 à 160, on dispose de vecteurs $F(x,y)$ considérés comme formant une bonne description de l'échantillon. Chaque vecteur $F(x,y)$ comporte un terme $L(x,y)$ représentant une différence de trajet optique subie par l'onde lumineuse d'exposition 14 par rapport à une onde lumineuse d'exposition de référence, en l'absence de cellule à la coordonnée $(x,y)$. L'image d'observation $I_{10}$ correspond à une distribution spatiale de la grandeur $L(x,y)$ dans le plan de l'échantillon $P_{10}$.

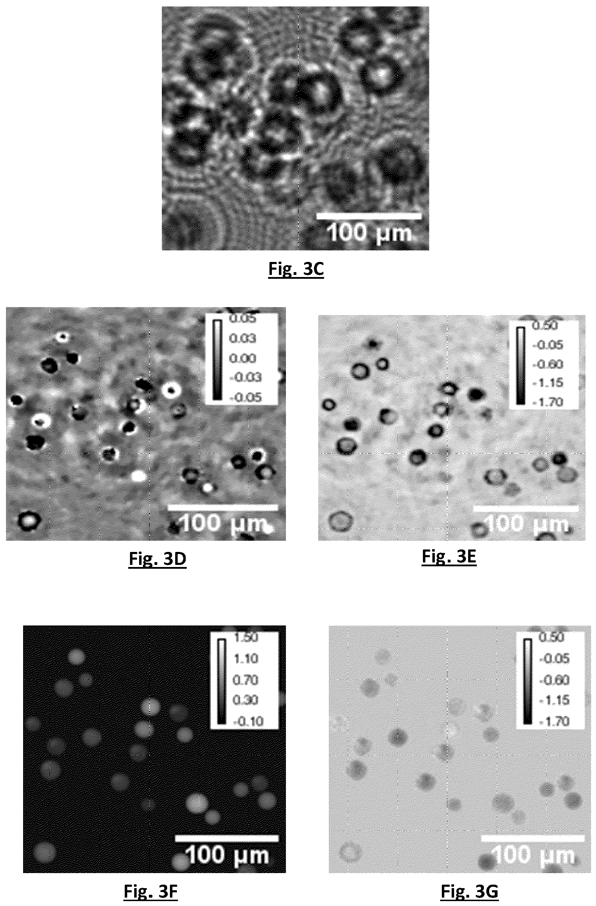

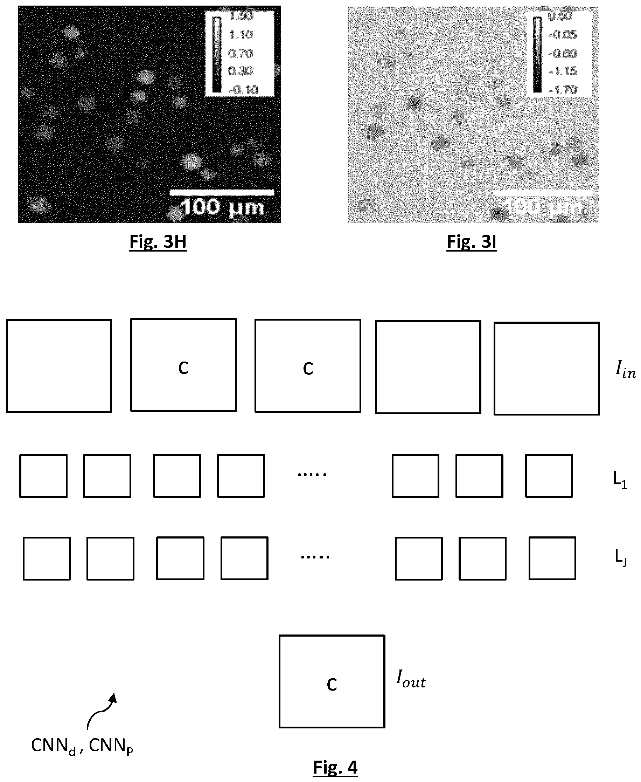

Les figures 3A, 3B, 3C, 3D, 3E, 3F, 3G, 3H et 3I illustrent les étapes précédemment décrites. Ces figures représentent respectivement :

- une distribution spatiale d'une différence de trajet optique « groung truth » $L_{gt}(x,y)$ dans un plan d'échantillon (unité $\mu$m) ;
- une distribution spatiale d'absorbance « ground truth » $\alpha_{gt}(x,y)$ dans le plan de l'échantillon;
- une simulation d'une image (hologramme) acquise par le capteur d'image, correspondant à un échantillon dont les propriétés optiques correspondent aux distributions spatiales représentées sur les figures 3A et 3B. La distance échantillon / capteur d'image est de 1270 $\mu$m.
- une distribution spatiale de la différence de trajet optique $L^N(x,y)$ dans le plan de l'échantillon (unité $\mu$m) obtenue après une première mise en œuvre de l'algorithme itératif décrit en lien avec les étapes 120 à 160 ;
- une distribution spatiale d'absorbance $\alpha^N(x,y)$ dans le plan de l'échantillon (unité $\mu$m) obtenue après une première mise en œuvre de l'algorithme itératif décrit en lien avec les étapes 120 à 160 ;
- une distribution spatiale de la différence de trajet optique $L(x,y)$ résultant d'une première mise en œuvre de l'étape 170, le réseau de neurones d'actualisation étant alimenté par les distributions spatiales représentées sur les figures 3D et 3E.
- une distribution spatiale de l'absorbance $\alpha(x,y)$ résultant d'une première mise en œuvre de l'étape 170, le réseau de neurones d'actualisation étant alimenté par les distributions spatiales représentées sur les figures 3D et 3E.
- une distribution spatiale de la différence de trajet optique $L(x,y)$ résultant de deuxièmes itérations des étapes 120 à 160 ;
- une distribution spatiale de l'absorbance $\alpha(x,y)$ résultant de deuxièmes itérations des étapes 120 à 160.

Les étapes 100 à 180 sont répétées à différents instants t successifs, de façon à obtenir une pluralité d'images d'observation de l'échantillon $I_{10}(t)$ correspondant respectivement à chaque instant. Ainsi, à partir d'un instant initial $t_i$, on forme $K$ images d'observation $I_{10}(t_i), I_{10}(t_i + 1) ... I_{10}(t_i + K)$. Par exemple, $K = 5$. Les instants $t_i...t_i + K$ forment une plage temporelle d'acquisition.

A partir des images d'observation, une deuxième phase de traitement est effectuée, visant à détecter ou à prévoir une survenue de l'évènement cellulaire.

Les étapes 200 à 230, décrites ci-après, visent à détecter une survenue d'un évènement cellulaire. Elles sont basées sur le recours à un algorithme d'intelligence artificielle à apprentissage supervisé. Dans cet exemple, il s'agit d'un réseau de neurones convolutif de détection $CNN_d$.

Etape 200 : formation de données d'entrées

Au cours de cette étape, on dispose de plusieurs images $I_{10}(t)$, acquises entre des intervalles temporels prédéterminées, par exemple de 10 minutes.

Etape 210 : utilisation des K images d'observation $I_{10}(t)$ en tant que données d'entrée d'un réseau de neurones convolutif $CNN_d$, dit réseau de neurones convolutif de détection.

Le réseau de neurones convolutif de détection $CNN_d$ a préalablement fait l'objet d'un apprentissage supervisé, de façon à pouvoir détecter une survenue d'un évènement cellulaire à partir des images formant les données d'entrée.

Un tel réseau de neurones convolutif est représenté sur la figure 4. Il comporte une couche d'entrée $I_{in}$, formée par les K images d'observation $I_{10}(t)$, et une image de sortie $I_{out}$. L'image de sortie $I_{out}$ est une image, de même dimension que chaque image d'observation, montrant une position de chaque évènement cellulaire éventuellement détectée entre les instants $t_i$ et $t_i + K$.

Le réseau de neurones convolutif de détection $CNN_d$ comporte un bloc d'extraction de caractéristiques des images d'entrée. De façon connue dans le domaine des réseaux de neurones convolutifs, le bloc d'extraction de caractéristiques comporte une série de couches, chaque couche résultant de l'application d'un noyau de convolution à une couche précédente. Dans cet exemple, le réseau de neurones convolutif comporte 20 couches de convolution $L_1...L_J$. chaque couche résultant de l'application d'un noyau de convolution de taille $3 \times 3$ à une couche précédente. Le nombre de filtres de convolutions par couche est égal à 32. Les paramètres des filtres de convolution appliqués à chaque couche sont déterminés lors de l'apprentissage. Entre deux couches successives, chaque couche subit une normalisation par lot, usuellement désignée « batch normalization » et une opération de rectification linéaire, usuellement désignée « ReLU (Rectified Linear Unit).

La dernière couche de convolution $L_J$ forme une première couche d'un bloc de reconstruction, visant construire une image de sortie représentant une distribution spatiale d'une probabilité de survenue d'une division cellulaire. Dans cette application, la reconstruction vise à déterminer, dans chaque pixel d'une image formant la couche d'entrée, une probabilité de survenue d'un évènement cellulaire. L'image de sortie $I_{out}$ a la même dimension que chaque image d'observation formant la couche d'entrée, et dont le niveau de gris correspond à une probabilité d'occurrence de l'évènement cellulaire considéré durant la plage temporelle d'acquisition.

Le réseau de neurones convolutif de détection $CNN_d$ permet l'utilisation d'images de dimension quelconque en tant que donnée d'entrée. Il a été programmé avec le module « deep learning library » du logiciel Matlab (éditeur The Mathworks).

Le réseau de neurones convolutif de détection $CNN_d$ a préalablement fait l'objet d'un apprentissage, à l'aide d'images apprentissage. L'apprentissage est décrit par la suite, en lien avec l'étape 200'.

Etape 220 : à partir de l'image $I_{out}$ formant la sortie du réseau de neurones convolutif de détection $CNN_d$, détermination de la survenue de l'évènement cellulaire, et, le cas échéant, localisation d'une région d'intérêt ROI de l'échantillon dans laquelle il est estimé que l'évènement cellulaire a eu lieu. Lorsque le niveau de gris de l'image de sortie $I_{out}$ est d'autant plus élevé que la probabilité de survenue d'un évènement cellulaire est élevée, l'image de sortie comporte des taches claires, chaque tache claire correspondant à une région d'intérêt ROI dans laquelle il est estimé qu'une division cellulaire a eu lieu.

Afin d'améliorer les performances de détection du réseau de neurones, les images d'observation formant les données d'entrée peuvent faire l'objet d'un seuillage en intensité, de façon à éliminer les pixels dont l'intensité est inférieure à un seuil prédéterminé. Il en est de même de l'image de sortie : le seuillage de l'image de sortie permet d'adresser des évènements dont la probabilité d'occurrence est supérieure à un seuil prédéterminé.

Etape 230 : au cours de cette étape, chaque région d'intérêt ROI révélée par l'image de sortie $I_{out}$ peut faire l'objet d'une observation plus précise, selon la modalité d'imagerie de fluorescence en fort grandissement, à l'aide du système optique 25 couplé au deuxième capteur d'image 26. Au cours de cette modalité, l'échantillon est illuminé, dans la bande spectrale d'excitation du marqueur fluorescent, par la deuxième source de lumière 21.

L'unité de commande 40 peut être configurée pour déplacer automatiquement l'échantillon par rapport au système optique 25 de façon que chaque région d'intérêt ROI soit successivement dans le plan objet du système optique 25. L'étape 230 est optionnelle.

Etape 200' : apprentissage.

Le recours à un réseau de neurones suppose une phase d'apprentissage. Au cours de la phase d'apprentissage, on utilise des images d'apprentissage, correspondant à des images d'observation d'un échantillon d'apprentissage, dont on sait si elles correspondent à une survenue d'un évènement cellulaire. On utilise des images d'apprentissage positives, correspondant à un évènement cellulaire, et des images d'apprentissage négatives, non représentatives d'un évènement cellulaire.

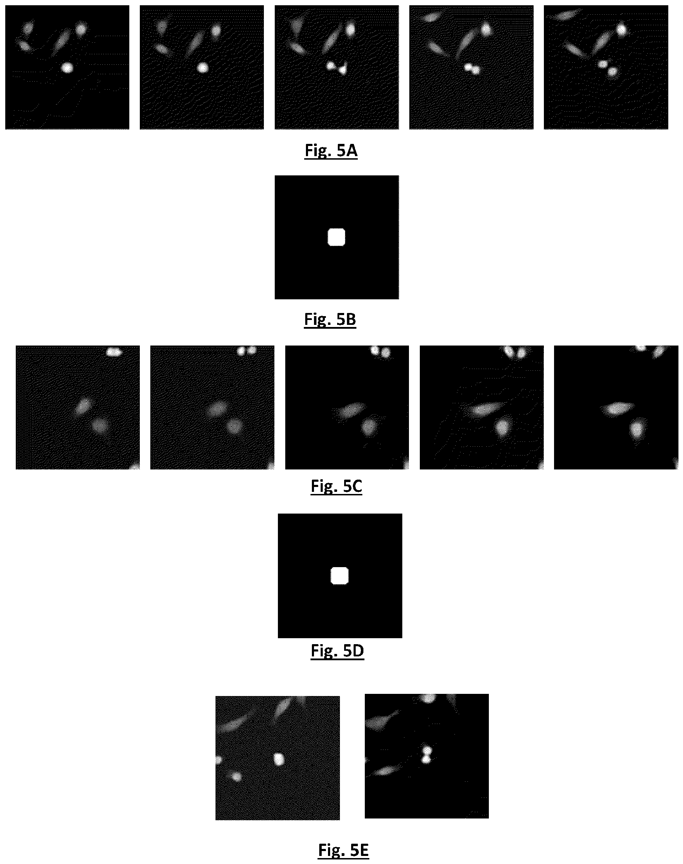

Les inventeurs ont effectué un apprentissage d'un réseau de neurones convolutif de détection tel que décrit dans l'étape 210. La figure 5A représente 5 images d'observation, de dimension 121 * 121 pixels, utilisées en tant qu'images d'apprentissage positives. Dans l'exemple représenté sur la figure 5A, l'évènement cellulaire est une division cellulaire (Mitose). Il s'agit d'images formées en utilisant un échantillon comportant des cellules HeLa Cells (cellules HeLa) se divisant par mitose. Les images d'observation sont espacées de 10 minutes l'une de l'autre. Les images ont été formées en étant temporellement centrées de part et d'autre de la division cellulaire. Aussi, si la mitose intervient à un instant $t_m$, les images d'observation sont obtenues à partir d'images respectivement acquises à $t_m$ — 20 minutes, $t_m$ — 10 minutes, $t_m$, $t_m$ + 10 minutes, $t_m$ + 20 minutes. D'une façon plus générale, il est nécessaire que les images d'observations utilisées pour l'apprentissage soient représentatives de la survenue d'une mitose, cette dernière étant de préférence centrée sur l'image.

La figure 5B représente une image d'apprentissage de sortie, sur laquelle la survenue de la mitose est représentée par une tache claire, au centre de l'image.

Le réseau de neurones convolutif de détection a été entraîné en utilisant des jeux comportant :

- 5 images d'apprentissage d'entrée, telles que représentées sur la figure 5A ;
- 1 image d'apprentissage de sortie, telle que représentée sur la figure 5B.

Les images représentées sur les figures 5A et 5B constituent un jeu d'apprentissage positif, au sens ou il correspond à une survenue effective d'une mitose. Les jeux d'apprentissage positifs ont été formés en obtenant, à partir de différentes images acquises, des images d'observation, comme décrit en lien avec les étapes 100 à 160. On a appliqué un algorithme de tracking (suivi de position) de cellules sur les différentes images d'observation formées sur la base des images acquises. La survenue d'une mitose a été détectée par une augmentation du volume de la cellule, suivi d'un dédoublement de la trace de la cellule sur l'image d'observation, suite auquel on observe deux traces restant à proximité l'une de l'autre, typiquement pendant au moins une ou deux heures.

Les jeux d'apprentissage ont été complétés par des jeux « négatifs », sur lesquels aucune mitose n'était détectée.

On a utilisé plus de 10000 jeux d'apprentissage.

Les paramètres d'acquisition des d'images d'apprentissage étaient :

- distance source de lumière 11 — échantillon : 50 mm ;
- distance échantillon — capteur d'image 16 : 1270 $\mu$m ;
- longueur d'onde de l'onde lumineuse incidente 12 : 450 nm ;
- diamètre du diaphragme 18 de la source de lumière : 50 $\mu$m ;
- nombre de pixels du capteur d'image : 3200 × 2700
- largeur des pixels du capteur : 1.67 $\mu$m.

Essai expérimental du réseau de neurones convolutif de détection.

Suite à l'apprentissage, les inventeurs ont mis en œuvre les étapes 100 à 240, sur des images de test, pour lesquelles la survenue et la position d'une éventuelle mitose était connue. Les images de test n'avaient pas été utilisées lors de la phase d'apprentissage. Leur dimension était de 121 pixels × 121 pixels. Les images de test ont été effectuées sur deux échantillons différents, comportant des cellules de type HeLa.

Le tableau 1 synthétise les résultats obtenus :

Tableau 1

| Référence échantillon | 1 | 2 |
|---|---|---|
| Nombre de mitoses | > 100 | 77 |
| Vrais positifs | 99.05 % | 96% |
| Faux négatifs | 0.07 % | 1.3% |
| Faux positifs | 0.25% | 1.3 % |

Selon un deuxième mode de réalisation, le réseau de neurones vise non pas à détecter la survenue d'un évènement cellulaire durant la plage temporelle d'acquisition, mais à prévoir la survenue de l'évènement cellulaire à un instant postérieur à la plage temporelle d'acquisition. De même que décrit en lien avec les étapes 200 à 220, il s'agit d'un réseau de neurones convolutif.

Etape 300 : formation de données d'entrées

Au cours de cette étape, on dispose de plusieurs images $I_{10}(t)$, acquises entre des intervalles temporels de 10 minutes. Ainsi, à partir d'un instant initial $t_i$, on forme $K$ images d'observation $I_{10}(t_i), I_{10}(t_i + 1) ... I_{10}(t_i + K)$. Par exemple, $K = 5$.

Etape 310 : utilisation des $K$ images d'observation $I_{10}(t)$ en tant que données d'entrée d'un réseau de neurones convolutif $CNN_p$, dit réseau de neurones convolutif de prévision.

Le réseau de neurones convolutif de prévision $CNN_p$ a préalablement fait l'objet d'un apprentissage supervisé, de façon à pouvoir prévoir une survenue d'un évènement cellulaire à partir des images d'entrée, l'évènement cellulaire survenant postérieurement à l'acquisition des images d'entrée. La structure du réseau de neurones convolutif de prévision est similaire à celle du réseau de neurones de détection, décrite en lien avec la figure 4.

Dans cette application, le réseau de neurones débouche sur une image de sortie $I_{out}$, de même dimension que chaque image d'observation formant la couche d'entrée, et dont le niveau de gris correspond à une probabilité d'occurrence d'un évènement cellulaire, postérieurement à la plage temporelle d'acquisition, c'est-à-dire postérieurement aux instants $t_i$ et $t_i + K$.

Contrairement au réseau de neurones de détection $CNN_d$, le réseau de neurones de prévision $CNN_p$ permet de prévoir la survenue d'un évènement cellulaire dans un intervalle temporel de prévision, postérieur à la plage temporelle d'acquisition $[t_i; t_i + K]$ au cours de laquelle les images de l'échantillon sont acquises. Il s'agit non pas de détecter un évènement cellulaire pendant la plage temporelle d'acquisition des images, mais postérieurement à cette dernière, par exemple entre 10 minutes à 1 heure après la plage temporelle d'acquisition. Ainsi, l'évènement cellulaire survient dans un intervalle temporel de prévision, postérieur à la plage temporelle d'acquisition, et par exemple temporellement décalé de cette dernière de 10 minutes à 1 heure.

Le réseau de neurones convolutif de prévision $CNN_p$ a préalablement fait l'objet d'un apprentissage, à l'aide d'images apprentissage. L'apprentissage est décrit par la suite, en lien avec l'étape 300'.

Etape 320 : à partir de l'image formant la sortie du réseau de neurones convolutif de prévision $CNN_p$, prévision d'une survenue d'un évènement cellulaire postérieurement à la plaque temporelle d'acquisition, et localisation de l'éventuel évènement cellulaire. Le niveau de gris de l'image de sortie $I_{out}$ peut être d'autant plus élevé que la probabilité de survenue d'une division cellulaire est élevée, auquel cas l'image de sortie comporte des taches claires, chaque tache claire correspondant à une région d'intérêt $ROI$ dans laquelle il est estimé qu'une division cellulaire va avoir lieu dans l'intervalle temporel de prévision défini lors de l'apprentissage. Un exemple d'image de sortie est décrit en lien avec la figure 5F.

Afin d'améliorer les performances de prédiction du réseau de neurones, les images formant les données d'entrée peuvent faire l'objet d'un seuillage en intensité. Il en est de même de l'image de sortie. Le seuillage de l'image de sortie permet d'adresser des évènements dont la probabilité d'occurrence est supérieure à un seuil prédéterminé

Etape 330 : au cours de cette étape, chaque région d'intérêt révélée par l'image de sortie $I_{out}$ peut faire l'objet d'une observation plus précise, selon la modalité d'imagerie en fort grandissement, à l'aide du système optique 25 et du deuxième capteur d'image 26. Il peut par exemple s'agir d'une image de fluorescence. Au cours de cette modalité, l'échantillon est illuminé, dans la bande spectrale d'excitation du marqueur fluorescent, par la deuxième source de lumière 21. L'unité de commande 40 peut être configurée pour déplacer automatiquement l'échantillon par rapport au système optique 25 de façon que chaque région d'intérêt $ROI$ soit successivement dans le plan objet du système optique 25. L'étape 330 est optionnelle.

Etape 300' : apprentissage.

Le recours à un réseau de neurones suppose une phase d'apprentissage. Au cours de la phase d'apprentissage, on utilise des images d'apprentissage, correspondant à des images d'observation d'un échantillon d'apprentissage, dont on sait si elles correspondent à une survenue d'un évènement cellulaire dans un intervalle temporel postérieur à la plage temporelle d'acquisition des images.

Les inventeurs ont effectué un apprentissage d'un réseau de neurones convolutif de prévision tel que décrit dans l'étape 310. L'événement cellulaire recherché était une mitose. La figure 5C représente 5 images d'observation, de dimension 121 * 121 pixels. Il s'agit d'images formées en utilisant un échantillon comportant des cellules de type Hela. Les images étaient espacées de 10 minutes l'une de l'autre. Dans un premier temps, on a utilisé des images d'apprentissage positives, qui précèdent une mitose. Aussi, si la mitose intervient à un instant $t_m$, les images d'observation sont obtenues :

- soit à partir d'images respectivement acquises à $t_m$ — 100 minutes, $t_m$ — 90 minutes, $t_m$ — 80 minutes, $t_m$ - 70 minutes, $t_m$ - 60 minutes (ce qui est représenté sur la figure 5C)
- soit à partir d'images respectivement acquises à $t_m$ — 70 minutes, $t_m$ — 60 minutes, $t_m$ — 50 minutes, $t_m$ - 40 minutes, $t_m$ - 30 minutes.

La figure 5D représente une image d'apprentissage de sortie, sur laquelle la survenue de la mitose est représentée par une tache claire, au centre de l'image. La figure 5D a été établie à partir des images représentées sur la figure 5E, qui correspondent à des images d'observation établies avant (image de gauche) et après (image de droite) la mitose. Ces images permettent d'identifier la localisation et l'instant $t_m$ de la mitose.

Le réseau de neurones convolutif de prédiction a été entraîné en utilisant des jeux comportant :

- 5 images d'apprentissage d'entrée, telles que représentées sur la figure 5C ;
- 1 image d'apprentissage de sortie, telle que représentée sur la figure 5D.

Les images représentées sur les figures 5C et 5D constituent un jeu d'apprentissage positif, au sens où il correspond à une survenue effective d'une mitose, quelques dizaines de minutes après la plage temporelle d'acquisition des images. Les jeux d'apprentissage ont été complétés par des jeux « négatifs », sur lesquels aucune mitose n'était détectée suite à la plage temporelle d'acquisition.

Le réseau de détection de mitose a été mise en œuvre sur des cellules de type « Mouse Lung Fibroblast ». Cela a permis de détecter la survenue de mitoses dans un échantillon. Le dispositif a permis d'identifier des régions d'intérêt, dans l'échantillon, dans lesquelles une mitose survenait. La mitose a pu être visualisée par microscopie de fluorescence. La figure 7 représente une séquence d'images d'une mitose acquises en microscopie de fluorescence. Ce type d'image permet une observation plus détaillée de la mitose.

On note que lorsqu'il est utilisé sans être couplé à une modalité d'imagerie en microscopie de fluorescence, le procédé permet une détection sans marquage d'une division cellulaire.

Essai expérimental du réseau de neurones convolutif de prévision.

Suite à l'apprentissage du réseau de neurones de prévision, les inventeurs ont mis en œuvre les étapes 100 à 170 et 300 à 320 précédemment décrites, sur des images de test, pour lesquelles la survenue et la position d'une éventuelle mitose était connue. Les images de test n'ont pas été utilisées lors de la phase d'apprentissage. Leur dimension était de 121 pixels × 121 pixels. Les images de test ont été effectuées sur un échantillon, comportant des cellules de type HeLa. Au cours d'une première série d'essais, on a utilisé un réseau de neurones de prévision dont l'apprentissage avait été effectué en considérant des images acquises respectivement 100, 90, 80, 70 et 60 minutes avant la mitose. Au cours d'une deuxième série d'essais, on a utilisé un réseau de neurones de prévision dont l'apprentissage avait été effectué en considérant des images acquises respectivement 70, 60, 50, 40 et 30 minutes avant la mitose.

Le tableau 2 synthétise les résultats obtenus :

Tableau 2

| Référence série d'essais | 1 | 2 |
|---|---|---|
| Nombre de mitoses | 65 | 52 |
| Vrais positifs | 74 % | 79% |
| Faux négatifs | 12 % | 6% |
| Faux positifs | 12 % | 12 % |

Bien que moins performant que le réseau de neurones de détection, ce qui était attendu, le réseau de neurones de prévision permet d'obtenir des résultats exploitables, le taux de vrais positifs étant supérieur à 70 %.

La figure 5F représente une image de sortie du réseau de neurone de prévision de division cellulaire. Sur cette image, chaque point clair correspond à une probabilité d'occurrence d'une division cellulaire, la probabilité étant supérieure à un seuil prédéterminé, dans l'intervalle temporel de prévision défini lors de l'étape d'apprentissage.

Dans les exemples décrits en lien avec les figures 5A à 5F, l'évènement cellulaire est une division cellulaire. L'invention peut également s'appliquer à la survenue d'une mort cellulaire. Une mort cellulaire peut s'accompagner d'une modification de la forme d'une cellule, cette dernière s'arrondissant. Cette particularité peut être mise à profit pour détecter la survenue d'une mort cellulaire.

Un réseau de neurones convolutif de détection $CNN_d$, dont la structure est similaire à celui décrit en lien avec les étapes 200 à 220, ainsi que la figure 4. Il a été paramétré pour détecter la survenue d'une mort cellulaire.

Les figures 6A et 6C représentent respectivement 5 images d'observation, de dimension 121 * 121 pixels. Il s'agit d'images formées en utilisant un échantillon comportant des cellules de type HeLa. Les images d'observation étaient espacées de 10 minutes l'une de l'autre. Les images ont été formées en étant temporellement centrées de part et d'autre de la mort cellulaire. Aussi, si la mort cellulaire intervient à un instant $t_a$, les images d'observation sont obtenues à partir d'images respectivement acquises à $t_a$ — 20 minutes, $t_a$ — 10 minutes, $t_a$, $t_a$ + 10 minutes, $t_a$ + 20 minutes.

Les figures 6B et 6D représentent une image d'apprentissage de sortie, sur laquelle la survenue de la mort cellulaire est représentée par une tache claire, au centre de l'image. Les figures 6B et 6D correspondent respectivement aux séries d'images représentées sur les figures 6A et 6C.

Le réseau de neurones convolutif de détection de mort cellulaire a été entraîné en utilisant des jeux comportant :

- 5 images d'apprentissage d'entrée, telles que représentées sur la figure 6A ou 6C ;
- 1 image d'apprentissage de sortie, telle que représentée sur la figure 6B ou 6D.

Variantes

Dans la description qui précède, on a décrit l'obtention d'une image d'observation de l'échantillon, correspondant à une distribution spatiale d'une différence de trajet optique $L(x,y)$, en reprenant une méthode décrite dans US16,907,407.

D'autres façons d'obtenir une distribution spatiale d'une différence de trajet optique ou d'absorbance sont également utilisables. Par exemple, la différence de trajet optique et l'absorbance peuvent être obtenues comme décrit dans la demande US20200124586.

On peut également se baser sur des méthodes permettant d'estimer un indice de réfraction $n_p$ de chaque cellule. Plus précisément, à partir d'une différence entre l'indice $n_p$ d'une cellule et l'indice de réfraction du milieu, il est possible d'estimer une différence de trajet optique moyenne $L(x,y)$ induite par la cellule. L'indice de réfraction de la cellule peut être estimé comme décrit dans la demande de brevet WO2020128282 ou US20200110017.

A partir de l'indice de réfraction de la cellule, moyennant une prise en compte d'une épaisseur de la cellule, la différence de trajet optique peut être estimée selon l'expression (1).

Selon une autre possibilité, chaque image d'observation de l'échantillon correspond à une distribution spatiale d'une absorbance $\alpha(x,y)$ de l'échantillon.

On remarque que le procédé décrit en lien avec la figure 2A permet une détection et une localisation d'une division cellulaire, ou d'une mort cellulaire, sans forcément recourir à un marqueur fluorescent ou à un marqueur coloré. Ce procédé peut être mis en œuvre sans marquage. Le marquage peut faciliter l'observation de chaque division cellulaire détectée selon la deuxième modalité.

Selon un mode de réalisation, lors de la première modalité, une optique de formation d'image est disposée entre l'échantillon et le capteur d'image. Le dispositif comporte alors un système optique 19, définissant un plan objet $P_{obj}$ et un plan image $P_{im}$, comme représenté sur la figure 8. Le premier capteur d'image 16 est alors disposé selon une configuration dite défocalisée, selon laquelle l'échantillon s'étend selon un plan décalé par rapport au plan objet, et/ou le plan de détection du premier capteur d'image s'étend selon un plan décalé par rapport au plan image. Par configuration défocalisée, on entend une configuration comportant un décalage de l'échantillon et/ou du premier capteur d'image par rapport à une configuration de mise au point, selon laquelle le plan de détection $P_0$ est conjugué d'un plan $P_{10}$ selon lequel s'étend l'échantillon. Le décalage $\delta$ est de préférence inférieur à 500 $\mu$m, voire à 200 $\mu$m. Il est de préférence supérieur à 10 $\mu$m ou 20 $\mu$m. De la même manière qu'en configuration sans lentille, une telle configuration permet l'obtention d'une image dans laquelle chaque cellule apparaît sous la forme d'une figure de diffraction, des interférences se produisant entre l'onde lumineuse émise par la première source de lumière et se propageant jusqu'au premier capteur d'image et une onde de diffraction générée par chaque particule de l'échantillon.

Dans l'exemple représenté sur la figure 8, le plan objet $P_{obj}$ est confondu avec un plan $P_{10}$ selon lequel s'étend l'échantillon et le plan image $P_{im}$ est décalé par rapport au plan de détection $P_0$ selon un décalage $\delta$.

Le procédé décrit en lien avec les étapes 100 à 180 est applicable à des images acquises selon une telle configuration. Toutefois, une configuration en imagerie sans lentille est préférée, par le plus grand champ d'observation qu'elle procure et sa plus grande compacité.

**Revendications**

1. Procédé de détection ou de prévision de la survenue d'un évènement cellulaire, choisi parmi une division cellulaire ou une mort cellulaire, dans un échantillon (10), l'échantillon s'étendant selon au moins un plan d'échantillon ($P_{10}$) et comportant des cellules ($10_p$), baignant dans un milieu, le procédé comportant les étapes suivantes :

   - a) disposition de l'échantillon entre une source de lumière (11) et un capteur d'image (16);
   - b) illumination de l'échantillon (10) par la source de lumière (11) et acquisition de plusieurs images (($I_1(t_i), I_1(t_i + 1) \ldots I_1(t_i + K)$)) successives de l'échantillon, par le capteur d'images, en différents instants ($[t_i; t_i + K]$) formant une plage temporelle d'acquisition, chaque image étant représentative d'une onde lumineuse d'exposition auquel est exposé le capteur d'image ;
   - c) à partir chaque image acquise de l'échantillon, calcul d'une image d'observation à chaque instant ($I_{10}(t_i)$, $I_{10}(t_i + 1) \ldots I_{10}(t_i + K)$), l'image d'observation correspondant à une distribution spatiale d'une différence de trajet optique ($L(x,y)$) induite par les cellules, ou d'une absorbance des cellules ($\alpha(x,y)$), dans le plan d'échantillon ($P_{10}$), la différence de trajet optique ($L(x,y)$), en chaque coordonnée transversale ($x,y$) correspondant à une différence entre le trajet optique de l'onde lumineuse d'exposition respectivement en présence et en l'absence de cellule à ladite coordonnée transversale

le procédé étant **caractérisé en ce qu'**il comporte également :

- d) utilisation des images d'observation résultant de c), en tant que données d'entrée d'un algorithme d'intelligence artificielle supervisé ($CNN_d$, $CNN_p$), de façon à

  • détecter et localiser une survenue de l'évènement cellulaire durant la plage temporelle d'acquisition;
  • ou prédire une survenue et une localisation de l'évènement cellulaire postérieurement à la plage temporelle d'acquisition.

2. Procédé selon la revendication 1, dans lequel la différence de trajet optique correspond :

  - en présence d'une cellule, à une différence entre les indices de réfraction respectifs de la cellule et du milieu multipliée par l'épaisseur de ladite cellule ;
  - en l'absence de cellule, à une valeur nulle.

3. Procédé selon l'une quelconque des revendications précédentes, dans lequel au cours de l'étape c), chaque image d'observation est calculée en mettant en œuvre un algorithme itératif, comprenant les sous-étapes suivantes :

  - i) attribution de paramètres de l'échantillon ($F(x,y)$) en différentes coordonnées du plan de l'échantillon, au moins un paramètre étant la différence de trajet optique ($L(x,y)$) ou l'absorbance ($\alpha(x,y)$);
  - ii) calcul d'une image complexe de l'échantillon $\left(A_{10}^n(x,y)\right)$ , en fonction des paramètres de l'échantillon, l'image complexe de l'échantillon étant définie dans le plan de l'échantillon;
  - iii) propagation de l'image complexe de l'échantillon résultant de ii), de façon à estimer une image $\left(\hat{I}_1^n\right)$ acquise par le capteur d'image ;
  - iv) comparaison de l'image $\left(\hat{I}_1^n\right)$ estimée lors de iii) avec une image acquise ($I_1$) par le capteur d'image, au même instant ;
  - v) en fonction de la comparaison, mise à jour de paramètres ($F^n(x,y)$) de l'échantillon ;
  - vi) réitération des sous-étapes ii) à v) en mettant à jour à chaque itération, l'image complexe de l'échantillon à l'aide des paramètres ($F^n(x,y)$) mis à jour lors de la sous-étape v) de l'itération précédente, les sous-étapes ii) à v) étant réitérées pendant un nombre d'itérations prédéterminées ou jusqu'à l'atteinte d'un critère d'arrêt des itérations.

4. Procédé selon la revendication 3, dans lequel le procédé comporte,

  - vii) utilisation des paramètres de l'échantillon, résultant de vi), en tant que données d'entrée d'un réseau de neurones d'actualisation ($CNN_a$), pour actualiser les paramètres de l'échantillon ;
  - viii) puis réitération des sous-étapes i) à vi), en utilisant, dans l'étape i), les paramètres résultant de l'étape vii).

5. Procédé selon l'une quelconque des revendications 1 ou 2 dans lequel l'étape c) comporte :

  - une estimation d'un indice de réfraction de cellules ;
  - une prise en compte d'une épaisseur de chaque cellule, selon l'axe de propagation (Z) ;
  - en chaque coordonnée transversale correspondant à une cellule, une détermination de la différence de trajet optique à partir de l'indice de réfraction et de l'épaisseur de la cellule.

6. Procédé selon l'une quelconque des revendications précédentes, dans lequel l'algorithme d'intelligence artificielle supervisé met en œuvre un réseau de neurones convolutif ($CNN_d$, $CNN_p$), les images d'observation ($I_{10}(t_i)$, $I_{10}(t_i + 1)$ ...$I_{10}(t_i + K)$) étant utilisées en tant que couche d'entrée du réseau de neurones convolutif.

7. Procédé selon l'une quelconque des revendications précédentes, dans lequel l'étape d) comporte une détection et une localisation d'une survenue de l'évènement cellulaire durant la plage temporelle d'acquisition.

8. Procédé selon l'une quelconque des revendications 1 à 6, dans lequel l'étape d) comporte une détection et une localisation d'une survenue de l'évènement cellulaire dans un intervalle temporel de prévision, postérieurement la plage temporelle d'acquisition.

9. Procédé selon la revendication 8, dans lequel l'intervalle temporel de prévision peut survenir entre 10 minutes et 1 heure après la plage temporelle d'acquisition.

10. Procédé selon l'une quelconque des revendications précédentes, dans lequel aucune optique de formation d'image n'est disposée entre l'échantillon (10) et le capteur d'image (16).

11. Procédé selon l'une quelconque des revendications précédentes, dans lequel le capteur d'image (16) mis en œuvre lors de l'étape b) est un premier capteur d'image, le procédé comportant, suite à l'étape d),

   - e) détermination d'une région d'intérêt de l'échantillon, comprenant la division cellulaire ;
   - f) positionnement de l'échantillon dans le plan objet d'un système optique (25), le système optique définissant un grandissement supérieur à 1, le système optique étant couplé à un deuxième capteur d'image (26);
   - g) acquisition d'une image de la région d'intérêt de l'échantillon par le deuxième capteur d'image.

12. Procédé selon la revendication 11, dans lequel l'échantillon comporte un marqueur fluorescent, le marqueur fluorescent définissant une bande spectrale d'excitation et une bande spectrale de fluorescence, le procédé étant tel que lors de l'étape g) :

   - l'échantillon est illuminé par une deuxième source de lumière (21), configurée pour illuminer l'échantillon selon la bande spectrale d'excitation ;
   - l'image de la région d'intérêt de l'échantillon est acquise dans la bande spectrale de fluorescence.

13. Dispositif d'observation d'un échantillon, comportant :

   - une source de lumière (11);
   - un capteur d'image (16);
   - un support ($10_s$), configuré pour maintenir l'échantillon entre la source de lumière et le capteur d'image ;
   - une unité de traitement (50), configurée pour mettre en œuvre les étapes c) et d) d'un procédé selon l'une quelconque des revendications 1 à 12, à partir d'images acquises par le capteur d'image.

**Fig. 1A**

**Fig. 1B**

**Fig. 1C**

**Fig. 2A**

**Fig. 2B**

**Fig. 3A**

**Fig. 3B**

Fig. 3C

Fig. 3D

Fig. 3E

Fig. 3F

Fig. 3G

**Fig. 3H**

**Fig. 3I**

$I_{in}$

$L_1$

$L_J$

CNN$_d$ , CNN$_P$

$I_{out}$

**Fig. 4**

Fig. 5A

Fig. 5B

Fig. 5C

Fig. 5D

Fig. 5E

Fig. 5F

Fig. 6A

Fig. 6B

Fig. 6C

Fig. 6D

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10481076 B
- WO 2018187548 A
- EP 3519899 A1
- US 16907407 B
- US 20200124586 A
- WO 2020128282 A
- US 20200110017 A